# EUROPEAN PATENT APPLICATION

(11) **EP 1 802 009 A2**
(43) Date of publication of application: **27.06.2007**
(21) Application number: 06120246.1
(22) Date of filing: 07.09.2006
(51) Int. Cl.: H04H 1/00

(54) **Receiver for receiving digital broadcast and method of optimizing power consumption in a receiver for receiving digital broadcasts**

(30) Priority: 23.12.2005 KR 20050128701
(71) Applicant: Samsung Electronics Co., Ltd., Suwon-si 442-742 Gyeonggi-Do (KR)
(72) Inventor: CHOI, Hyun-seok, Seoul (KR); LEE, Min-jae, Jung-gu, Seoul (KR); KIM, Young-keun, Jakjeonseoun-dong, Gyeyang-gu Incheon-si (KR); KIM, Hang-sung, Seongnam-si, Gyeonggi-do (KR)
(74) Representative: Brandon, Paul Laurence

(57) **Abstract**

Provided are a digital broadcasting receiver which controls an antenna unit (110) according to a reception state of a digital broadcasting signal to optimize power consumption and a method of optimizing power consumption in the digital broadcasting receiver. The digital broadcasting receiver includes an antenna unit which includes an antenna (112) and an amplifying unit (114) for amplifying a digital broadcasting signal received through the antenna; a broadcasting signal processing unit (120) which processes the digital broadcasting signal output from the antenna unit and generates a bit stream; and a controlling unit (130) which checks a bit error rate of the generated bit stream and controls power consumption of the antenna unit based on the bit error rate. Thus, it is possible to control the antenna unit according to the reception state of the digital broadcasting signal to optimize the power consumption.

## Description

The present invention relates to digital broadcasting receivers and methods of optimizing power consumption.

Recently, there is provided digital audio broadcasting (DAB) for providing various additional data services, such as weather, traffic, games, and images, as well as a high-quality audio service having the same quality as that of a compact disc (CD) using a newest audio coding method having a high compression rate. In addition, digital multimedia broadcasting (DMB) which is more developed than the DAB is provided.

Now, a transmission frequency band of domestic terrestrial digital multimedia broadcasting is 174 MHz to 216 MHz. A frequency band of European digital multimedia broadcasting is wider than that of the domestic digital multimedia broadcasting. An optimal resonance length of the frequency for receiving the digital multimedia broadcasting requires an antenna having a length of at least 30 cm. However, such an antenna is not suitable for a digital multimedia broadcasting terminal having a light weight and a small size.

Preferred embodiments of the present invention aim to provide a digital broadcasting receiver which controls an antenna unit according to a reception state of a digital broadcasting signal to optimize power consumption and a method of optimizing power consumption.

According to an aspect of the present invention, there is provided a digital broadcasting receiver including an antenna unit which includes an antenna and an amplifying unit for amplifying a digital broadcasting signal received through the antenna; a broadcasting signal processing unit which processes the digital broadcasting signal output from the antenna unit and generates a bit stream; and a controlling unit which checks a bit error rate of the generated bit stream and controls power consumption of the antenna unit based on the bit error rate.

The antenna unit may include a switch for selecting a transmission path of the broadcasting signal, and the switch may select one from a first path from the antenna to the broadcasting signal processing unit through the amplifying unit and a second path from the antenna to the broadcasting signal processing unit.

The generated bit stream may be corrected by a viterbi decoder included in the broadcasting signal processing unit, and the viterbi decoder may calculate the bit error rate of the bit stream.

When the bit error rate is maintained greater than a predetermined threshold value for a predetermined period of time, the controlling unit may control the switch to select the first path such that the broadcasting signal is transmitted along the first path.

When the bit error rate is maintained less than a predetermined threshold value for a predetermined period of time, the controlling unit may control the switch to select the second path such that the broadcasting signal is transmitted along the second path.

The switch may be a RF switch.

The broadcasting signal processing unit may demultiplex and decode the bit stream, and the digital broadcasting receiver may further include an output unit which the decoded bit stream.

The antenna may be a passive antenna.

According to another aspect of the present invention, there is provided a method of optimizing power consumption in a digital broadcasting receiver, including processing a received digital broadcasting signal and generating a bit stream; checking a bit error rate of the generated bit stream; and controlling the power consumption of an antenna unit included in the digital broadcasting receiver based on the bit error rate.

The present invention will become more apparent by describing in detail exemplary embodiments thereof with reference to the attached drawings in which:
FIG. 1 is a block diagram illustrating a digital broadcasting receiver according to an embodiment of the present invention;
FIG. 2 is a block diagram illustrating an internal configuration of the digital broadcasting receiver shown in FIG. 1;
FIG. 3 is a flowchart illustrating a method of optimizing power consumption in the digital broadcasting receiver according to an embodiment of the present invention; and
FIG. 4 is a flowchart illustrating a method of optimizing power consumption in the digital broadcasting receiver according to another embodiment of the present invention.

Hereinafter, exemplary embodiments of the present invention will be described in detail with reference to the accompanying drawings.

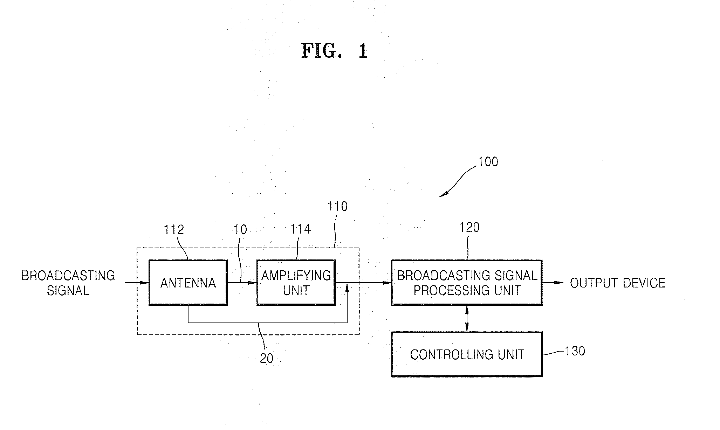

FIG. 1 is a block diagram illustrating a digital broadcasting receiver according to an embodiment of the present invention. The digital broadcasting receiver according to the present embodiment includes an antenna unit 110, a broadcasting signal processing unit 120, and a controlling unit 130.

The antenna unit 110 includes an antenna 112 and an amplifying unit 114 for improving reception capability of a digital broadcasting signal received through the antenna 112. The amplifying unit 114 amplifies the broadcasting signal received through the antenna 112 in order to normally receive the broadcasting signal in a weak electric field. The amplifying unit 114 is an active circuit for compensating for the length of the antenna 112 which is a small passive antenna and includes an amplifying circuit. The amplifying unit 114 consumes power due to current consumption of about 10 to 20 mA according to the configuration of the circuit. However, when a broadcasting reception state is good, the broadcasting signal can be received only using the antenna 112. In this case, when the amplifying unit 114 continuously operates, unnecessary power is consumed.

Accordingly, the controlling unit 130 controls the antenna unit 110 such that the amplifying unit 114 operates based on the broadcasting reception state. The antenna unit 110 includes a first path 10 from the antenna 112 to the broadcasting signal processing unit 120 through the amplifying unit 114 and a second path 20 from the antenna 112 to the broadcasting signal processing unit 120. Thus, the broadcasting signal is transmitted to the broadcasting signal processing unit 120 along the first path or the second path according to the broadcasting reception state.

The broadcasting signal processing unit 120 demodulates the digital broadcasting signal output from the antenna unit 110 to generate a bit stream, demultiplexes and decodes the generated bit stream, and outputs decoded broadcasting data to an output device. In addition, the broadcasting signal processing unit 120 includes a viterbi decoder (not shown), which corrects an error of the bit stream and calculates a bit error rate of the error-corrected bit stream.

The controlling unit 130 controls the digital broadcasting receiver 100 and can include a controller for individually all the units. Furthermore, the controlling unit 130 determines the broadcasting reception state based on the bit error rate of the bit stream output from the broadcasting signal processing unit 120 and controls power consumption of the antenna unit 110.

The controlling unit 130 monitors the bit error rate of the bit stream output from the viterbi decoder for correcting the error, which is included in the broadcasting signal processing unit 120. When the digital broadcasting receiver 100 operates in a strong electric field, the bit error rate has a very low value and, when the digital broadcasting receiver 100 operates in a weak electric field, the bit error rate has a relatively high value.

Accordingly, when the bit error rate is greater than a predetermined threshold value, that is, when it is determined that the digital broadcasting receiver 100 is in the weak electric field, the controlling unit 130 controls the antenna unit 110 such that the broadcasting signal is amplified by the amplifying unit 114 and is then transmitted to the broadcasting signal processing unit 120, that is, the broadcasting signal is transmitted along the first path 10. When the bit error rate is less than the predetermined threshold value, that is, when it is determined that the digital broadcasting receiver 100 is in the strong electric field, the controlling unit 130 controls the antenna unit 110 such that the broadcasting signal is directly transmitted from the antenna 112 to the broadcasting signal processing unit 120, not through the amplifying unit 114, that is, the broadcasting signal is transmitted along the second path 20. The controlling unit 130 can determine the operation of the amplifying unit 114 based on the bit error rate. Accordingly, when it is determined that the digital broadcasting receiver 100 is in the strong electric field, the amplifying unit 114 does not operate, and, only when it is determined that the digital broadcasting receiver 100 is in the weak electric field, the amplifying unit 114 operate, thereby reducing the power consumption.

In the digital broadcasting receiver 100, when the broadcasting signal is transmitted along the second path 20, if the bit error rate temporarily exceeds the predetermined threshold value and the bit error rate is immediately reduced again, the broadcasting signal need not be amplified. Accordingly, the controlling unit 130 may determine whether the bit error rate is greater than the predetermined threshold value for a predetermined period of time to control the operation of the amplifying unit 114. To do this, the controlling unit 130 operates a timer which may be included in the controlling unit 130, when the bit error rate exceeds the predetermined threshold value. Then, when the bit error rate is maintained greater than the predetermined threshold value during the predetermined period of time, the controlling unit 130 controls the antenna unit 110 such that the broadcasting signal is transmitted along the first path 10, that is, the amplifying unit 114 operates.

In the digital broadcasting receiver 100, when the broadcasting signal is amplified in the amplifying unit 114, that is, the broadcasting signal is transmitted along the first path 10, although the bit error rate temporarily falls less than the predetermined threshold value and immediately exceeds the predetermined threshold value, the amplifying unit 114 need continuously operate. Accordingly, when the digital broadcasting receiver 100 is in the weak electric field, if the bit error rate falls less than the predetermined threshold value, the controlling unit 130 operates the timer. Then, when the bit error rate is maintained less than the predetermined threshold value during a predetermined period, the controlling unit 130 controls the antenna unit 110 such that the broadcasting signal is transmitted along the second path 20, that is, power supplied to the amplifying unit 114 is blocked, thereby reducing the power consumption.

The predetermined threshold value of the bit error rate is experimentally determined and may be corrected. The predetermined period of time may be, for example, determined to 3 seconds or 5 seconds arbitrarily. In addition, when the bit error rate is equal to the predetermined threshold value, it may be determined that the digital broadcasting receiver 100 is in the strong electric field or the weak electric field according to the characteristics of the system.

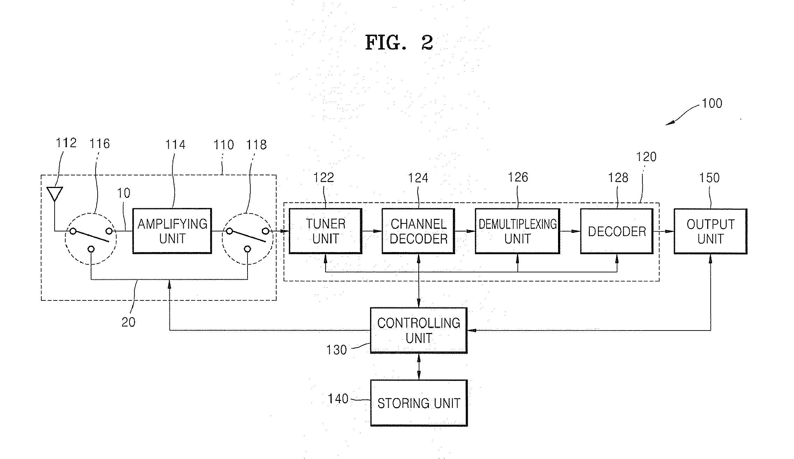

FIG. 2 is a block diagram illustrating an internal configuration of the digital broadcasting receiver shown in FIG. 1.

The antenna unit 110 includes switches 116 and 118, which select the path for transmitting the broadcasting signal. The switches 116 and 118 may be composed of RF switches. Furthermore, the switches 116 and 118 selects one from the first path 10 from the antenna 112 to the broadcasting signal processing unit 120 through the amplifying unit 114 and the second path 10 from the antenna 112 to the broadcasting signal processing unit 120, under the control of the controlling unit 130.

The broadcasting signal processing unit 120 includes a tuner unit 122, a channel decoder 124, a demultiplexing unit 126, and a decoder 128. The tuner unit 122 tunes one of a plurality of channels and outputs one of a plurality of broadcasting signals received from the antenna unit 110. The tuner unit 122 converts the radio frequency (RF) signal into an intermediate frequency (IF) signal and processes the IF signal.

The channel decoder 124 performs channel decoding according to a specific method. The channel decoder 124 converts an analog broadcasting signal into a digital broadcasting signal. The channel decoder 124 includes a viterbi decoder (not shown), which corrects an error generated in a process of transmitting the RF signal. The viterbi decoder calculates the bit error rate of the error-corrected bit stream. The demultiplexing unit 126 demultiplexes the channel-decoded signal and outputs a broadcasting transmission frame to the decoder 128. The decoder 128 decodes the broadcasting transmission frame and outputs the decoded broadcasting transmission frame to an output unit 150. The decoder 128 may include a plurality of video decoding units, an audio decoding unit, and a data decoding unit.

The controlling unit 130 monitors the bit error rate output from the viterbi decoder of the channel decoder 124. The controlling unit 130 controls the transmission path of the broadcasting signal in the antenna unit 110 based on the bit error rate.

For example, when the amplifying unit 114 does not operate, the controlling unit 130 checks the bit error rate. When the bit error rate is greater than the predetermined threshold value for the predetermined period of time, the controlling unit 130 determines that the digital broadcasting receiver 100 is in a weak electric field environment. Since the broadcasting signal need be amplified by the amplifying unit 114 in the weak electric field environment, the controlling unit 130 controls the switches 116 and 118 to select the first path 10. Thus, power is supplied to the amplifying unit 114 to operate the amplifying unit 114.

When the amplifying unit 114 operates, if the bit error rate falls less than the predetermined threshold value for the predetermined period of time, the controlling unit 130 determines that the digital broadcasting receiver 100 is in a strong electric field environment. Since the amplifying unit 114 need not operate in the strong electric field environment, the controlling unit 130 controls the switches 116 and 118 to select the second path 20. Thus, power is not supplied to the amplifying unit 114 to optimize the power consumption of the antenna unit 110.

A storing unit 140 includes a ROM area for storing a system control program and a RAM area for temporarily storing data necessary for operating the controlling unit 130. The output unit 150 may include an audio output unit including an audio codec and a display unit for outputting a video signal.

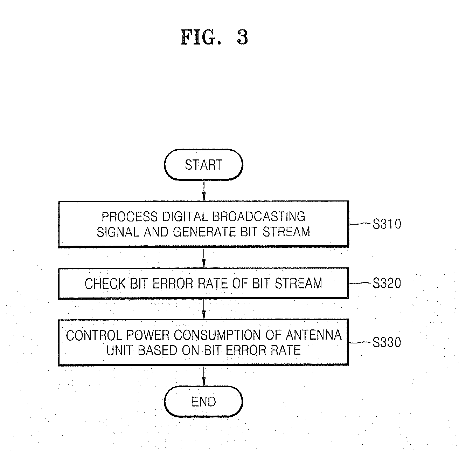

FIG. 3 is a flowchart illustrating a method of optimizing power consumption in the digital broadcasting receiver according to an embodiment of the present invention. The method of optimizing the power consumption in the antenna unit of the digital broadcasting receiver will be described with reference to FIGS. 2 and 3.

When the broadcasting signal processing unit 120 processes a digital broadcasting signal output from the antenna unit 110 and generates a bit stream (S310), the controlling unit 130 checks a bit error rate of the generated bit stream (S320). The controlling unit 130 controls the power consumption of the antenna unit 110 based on the checked bit error rate (S330).

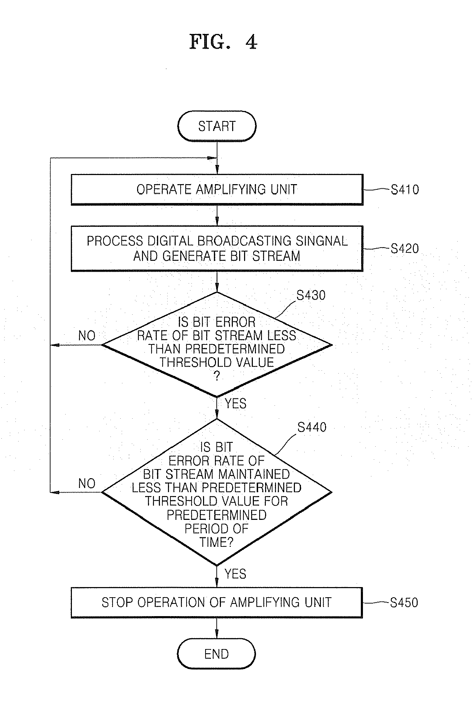

FIG. 4 is a flowchart illustrating a method of optimizing power consumption in the digital broadcasting receiver according to another embodiment of the present invention.

When the amplifying unit 114 of the digital broadcasting receiver 100 operates (S410), the broadcasting signal amplified in the amplifying unit 114 is processed in the broadcasting signal processing unit 120 to generate a bit stream (S420). The controlling unit 130 determines whether a bit error rate of the generated bit stream is less than a predetermined threshold value (S430).

When it is determined that the bit error rate is less than the predetermined threshold value, the controlling unit 130 determines whether the bit error rate is maintained less than the predetermined threshold value for a predetermined period of time (S440). When the bit error rate is maintained less than the predetermined threshold value for the predetermined period of time, the controlling unit 130 determines that the digital broadcasting receiver 100 is in the strong electric field. Accordingly, the controlling unit 130 controls the switches 116 and 118 of the antenna unit 110 to select the second path 20. As the result, power is not supplied to the amplifying unit 114 and thus the amplifying unit 114 does not operate (S450).

When the amplifying unit 114 of the digital broadcasting receiver 100 does not operate, the controlling unit 130 determines whether the bit error rate of the bit stream generated in the broadcasting signal processing unit 120 is greater than the predetermined threshold value. When it is determined that the bit error rate is greater than the predetermined threshold value, the controlling unit 130 determines whether the bit error rate is maintained greater than the predetermined threshold value for the predetermined period of time. When the bit error rate is maintained greater than the predetermined threshold value for the predetermined period of time, the controlling unit 130 controls the switches 116 and 118 of the antenna unit 110 to select the first path 10. Accordingly, power is supplied to the amplifying unit 114 and thus the amplifying unit 114 operates.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. (Also, functional programs, codes, and code segments for accomplishing the present invention can be easily construed by programmers skilled in the art to which the present invention pertains.)

According to a digital broadcasting receiver of preferred embodiments of the present invention, it is possible to control an antenna unit according to a reception state of a digital broadcasting signal to optimize power consumption.

According to a digital broadcasting receiver of preferred embodiments of the present invention, it is possible to optimize power consumption to increase a period of time when a user can receive and watch digital broadcasting.

According to a digital broadcasting receiver of preferred embodiments of the present invention, it is possible to optimize power consumption, reduce the power size of a battery used in the digital broadcasting receiver, and reduce manufacturing cost.

While the present invention has been particularly shown and described with reference to exemplary embodiments thereof, it will be understood by those of ordinary skill in the art that various changes in form and details may be made therein without departing from the spirit and scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A digital broadcasting receiver comprising:
an antenna unit (110) which includes an antenna (112) and an amplifying unit (114) for amplifying a digital broadcasting signal received through the antenna;
a broadcasting signal processing unit (120) which processes the digital broadcasting signal output from the antenna unit and generates a bit stream; and
a controlling unit (130) which checks a bit error rate of the generated bit stream and controls power consumption of the antenna unit based on the bit error rate.

2. The digital broadcasting receiver of claim 1, wherein the antenna unit (110) includes a switch (116) for selecting a transmission path of the broadcasting signal,
wherein the switch selects one from a first path (10) from the antenna (112) to the broadcasting signal processing unit (120) through the amplifying unit (114) and a second path (20) from the antenna to the broadcasting signal processing unit.

3. The digital broadcasting receiver of claim 1 or claim 2, wherein the generated bit stream is corrected by a viterbi decoder (128) included in the broadcasting signal processing unit (120), and the viterbi decoder calculates the bit error rate of the bit stream.

4. The digital broadcasting receiver of claim 2, wherein, when the bit error rate is maintained greater than a predetermined threshold value for a predetermined period of time, the controlling unit (130) controls the switch (116) to select the first path such that the broadcasting signal is transmitted along the first path (10).

5. The digital broadcasting receiver of claim 2, wherein, when the bit error rate is maintained less than a predetermined threshold value for a predetermined period of time, the controlling unit (130) controls the switch (116) to select the second path (20) such that the broadcasting signal is transmitted along the second path.

6. The digital broadcasting receiver of claim 2, wherein the switch (116) is a RF switch.

7. The digital broadcasting receiver of any preceding claim, wherein the broadcasting signal processing unit (120) demultiplexes and decodes the bit stream, and the digital broadcasting receiver further comprises an output unit (150) which the decoded bit stream.

8. The digital broadcasting receiver of any preceding claim, wherein the antenna is a passive antenna.

9. A method of optimizing power consumption in a digital broadcasting receiver, comprising:
processing a received digital broadcasting signal and generating a bit stream;
checking a bit error rate of the generated bit stream; and
controlling the power consumption of an antenna unit (110) included in the digital broadcasting receiver based on the bit error rate.

10. The method of claim 9, further comprising:
correcting an error generated in a process of transmitting the broadcasting signal; and
calculating the bit error rate of the error-corrected bit stream.

11. The method of claim 9 or claim 10, wherein the controlling of the power consumption comprises:
determining a reception state of the broadcasting signal based on the bit error rate; and
controlling the power consumption of the antenna unit (110) according to the determined reception state.

12. The method of any one of claims 9-11, wherein the controlling of the power consumption comprises:
determining whether the bit error rate is maintained greater than a predetermined threshold value for a predetermined period of time; and
selecting a path which passes through an amplifying unit (114) for amplifying the broadcasting signal to receive the broadcasting signal, when the bit error rate is maintained greater than the predetermined threshold value for the predetermined period of time.

13. The method of any one of claims 9-12, wherein the controlling of the power consumption comprises:
determining whether the bit error rate is maintained less than a predetermined threshold value for a predetermined period of time; and
selecting a path which does not pass through an amplifying unit (114) for amplifying the broadcasting signal to receive the broadcasting signal, when the bit error rate is maintained less than the predetermined threshold value for the predetermined period of time.

14. A computer-readable medium having embodied thereon a computer program for performing the method of any one of claims 9 through 13.
